# EUROPEAN PATENT APPLICATION

(11) **EP 4 625 846 A1**
(43) Date of publication of application: **01.10.2025**
(21) Application number: 22968285.1
(22) Date of filing: 16.12.2022
(51) Int. Cl.: H04B 10/2575

(54) **COMMUNICATION MODULE AND COMMUNICATION SYSTEM**

(71) Applicant: Huawei Technologies Co., Ltd., Shenzhen, Guangdong 518129 (CN)
(72) Inventor: SUN, Kaijian, Shenzhen, Guangdong 518129 (CN); TANG, Haizheng, Shenzhen, Guangdong 518129 (CN); YU, Haisheng, Shenzhen, Guangdong 518129 (CN); LI, Gang, Shenzhen, Guangdong 518129 (CN); LU, Shaoting, Shenzhen, Guangdong 518129 (CN); ZOU, Hong, Shenzhen, Guangdong 518129 (CN)
(74) Representative: Isarpatent
(86) International application number: PCT/CN2022/139786
(87) International publication number: WO 2024/124581

(57) **Abstract**

Embodiments of this application provide a communication module and a communication system. The communication module includes a combining and splitting unit and a digital-to-analog conversion unit, the combining and splitting unit is connected to the digital-to-analog conversion unit, and a digital signal is transmitted between the combining and splitting unit and the digital-to-analog conversion unit. The combining and splitting unit is configured to: in a first transmission direction, combine multi-carrier signals into one digital signal and transmit the digital signal to the digital-to-analog conversion unit; and in a second transmission direction, split one digital signal received from the digital-to-analog conversion unit into a plurality of multi-carrier signals. The digital-to-analog conversion unit is configured to: in the first transmission direction, convert the digital signal received from the combining and splitting unit into an analog signal; and in the second transmission direction, convert a received analog signal into the digital signal and transmit the digital signal to the combining and splitting unit. This greatly improves transmission efficiency at low costs.

## Description

### TECHNICAL FIELD

Embodiments of this application relate to the field of communication technologies, and in particular, to a communication module and a communication system.

### BACKGROUND

A baseband unit (Baseband Unit, BBU) is a communication system or functional module having a baseband signal processing function. A radio unit (Radio Unit, RU) is a communication system or functional module having an intermediate frequency signal, radio frequency signal, or intermediate and radio frequency signal processing function. The baseband unit (BBU) is connected to the radio unit (RU) through an optical fiber.

In a related technology, a common public radio interface (Common Public Radio Interface, CPRI) is usually used for signal transmission between the BBU and the RU. The CPRI transmits a baseband signal in a digital manner. Due to sensitivity to costs, power consumption, and the like, higher-order modulation is usually inapplicable to a digital signal transmitted on the CPRI, and lower-order modulation such as non-return-to-zero (Non-Return-to-Zero, NRZ) coding or pulse amplitude modulation (Pulse Amplitude Modulation, PAM) is usually used for the digital signal transmitted on the CPRI.

However, as traffic of mobile communication increases rapidly, when lower-order modulation is used, a limit capacity of a channel cannot be better approached, and consequently a capacity of the CPRI becomes a bottleneck of a capacity of an entire base station system. Especially, after a quantity of channels is greatly increased, the CPRI cannot meet a transmission capacity requirement of massive multiple-input multiple-output (Massive MIMO).

### SUMMARY

Embodiments of this application provide a communication module and a communication system, to greatly improve transmission efficiency of a system through analog signal transmission between two communication systems, and reduce communication costs.

According to a first aspect, an embodiment of this application provides a communication module, including a combining and splitting unit and a digital-to-analog conversion unit. The digital-to-analog conversion unit is located on one side of the combining and splitting unit, the combining and splitting unit is connected to the digital-to-analog conversion unit, and a digital signal is transmitted between the combining and splitting unit and the digital-to-analog conversion unit. The combining and splitting unit is configured to: in a first transmission direction, combine multi-carrier signals into one digital signal and transmit the digital signal to the digital-to-analog conversion unit; and in a second transmission direction, split one digital signal received from the digital-to-analog conversion unit into a plurality of multi-carrier signals. The digital-to-analog conversion unit is configured to: in the first transmission direction, convert the digital signal received from the combining and splitting unit into an analog signal; and in the second transmission direction, convert a received analog signal into the digital signal and transmit the digital signal to the combining and splitting unit. One of the first transmission direction and the second transmission direction is an uplink direction, and the other is a downlink direction.

According to the communication module provided in this embodiment of this application, the combining and splitting unit and the digital-to-analog conversion unit are disposed, so that the combining and splitting unit can combine the received multi-carrier signals to generate the digital signal, and the digital-to-analog conversion unit converts the digital signal into the analog signal and sends the analog signal. In this way, when the communication module is a baseband unit, an analog signal is transmitted between the communication module and another module (for example, a radio unit), and higher-order modulation can be performed on the analog signal. Therefore, higher-order modulation has been performed on the analog carrier signal on a baseband side, so that higher-order modulation does not need to be performed again. This greatly improves transmission efficiency at low costs. Therefore, according to the communication module provided in this embodiment of this application, transmission efficiency between the communication module and another module is effectively improved, and a transmission capacity of a channel is greatly improved, so that a transmission capacity requirement of massive MIMO can be met. In addition, no additional higher-order modulation needs to be performed, thereby reducing costs and avoiding excessively high power consumption.

In a feasible implementation, an intermediate frequency unit is further included. The intermediate frequency unit is located on the other side of the combining and splitting unit, the intermediate frequency unit is connected to the combining and splitting unit, and a digital signal is transmitted between the intermediate frequency unit and the combining and splitting unit. In this way, in the second transmission direction, filtering and frequency conversion processing can be performed on the digital multi-carrier signals received by the intermediate frequency unit from the combining and splitting unit, to meet performance requirements of the 3GPP.

In a feasible implementation, the intermediate frequency unit includes a digital filter and a digital path. The digital filter is connected to the combining and splitting unit, and a digital signal is transmitted between the digital filter and the combining and splitting unit. The digital filter is configured to filter a digital signal received from the combining and splitting unit and transmit a filtered digital signal through the digital path. The digital path is connected to the digital filter, and a digital signal is transmitted between the digital path and the digital filter. The digital path is configured to perform frequency conversion processing on a digital signal obtained after the digital filter performs filtering.

According to the digital filter, a signal edge is made extremely steep, to meet an indicator requirement of the 3GPP for an adjacent channel leakage ratio (ACLR). In addition, a (dynamic) SNR requirement for a transmission link is greatly reduced.

In a feasible implementation, the digital-to-analog conversion unit includes an analog-to-digital converter and a digital-to-analog converter. The analog-to-digital converter and the digital-to-analog converter are disposed in parallel. The analog-to-digital converter is configured to: in the second transmission direction, convert the received analog signal into the digital signal and transmit the digital signal to the combining and splitting unit. The digital-to-analog converter is configured to: in the first transmission direction, convert the digital signal received from the combining and splitting unit into the analog signal. The analog-to-digital converter and the digital-to-analog converter are disposed, and the analog-to-digital converter and the digital-to-analog converter are high-speed converters, so that a relatively large quantity of channels can be supported, thereby greatly improving transmission efficiency.

In a feasible implementation, the combining and splitting unit includes a combiner and a splitter. The combiner and the splitter are disposed in parallel. The combiner is configured to: in the first transmission direction, combine the multi-carrier signals into one digital signal and transmit the digital signal to the digital-to-analog conversion unit. The splitter is configured to: in the second transmission direction, split the digital signal received from the analog-to-digital converter into the plurality of multi-carrier signals.

In a feasible implementation, a correction unit is further included. The correction unit is connected to the combining and splitting unit.

In a feasible implementation, the communication module is a baseband unit.

In a feasible implementation, the communication module is a radio unit.

According to a second aspect, an embodiment of this application provides a communication system, including a first communication module and a second communication module. An analog signal is transmitted between the first communication module and the second communication module. The first communication module includes a first combining and splitting unit and a first digital-to-analog conversion unit, where the first digital-to-analog conversion unit is located on one side of the first combining and splitting unit, the first combining and splitting unit is connected to the first digital-to-analog conversion unit, and a digital signal is transmitted between the first combining and splitting unit and the first digital-to-analog conversion unit. The second communication module includes a second combining and splitting unit and a second digital-to-analog conversion unit, the second digital-to-analog conversion unit is located on one side of the second combining and splitting unit, the second combining and splitting unit is connected to the second digital-to-analog conversion unit, and a digital signal is transmitted between the second combining and splitting unit and the second digital-to-analog conversion unit. The first combining and splitting unit is configured to: in a first transmission direction, combine multi-carrier signals into one digital signal and transmit the digital signal to the first digital-to-analog conversion unit; and in a second transmission direction, split one digital signal received from the first digital-to-analog conversion unit into a plurality of multi-carrier signals. The first digital-to-analog conversion unit is configured to: in the first transmission direction, convert the digital signal received from the first combining and splitting unit into an analog signal and transmit the analog signal to the second digital-to-analog conversion unit; and in the second transmission direction, convert a received analog signal into the digital signal and transmit the digital signal to the first combining and splitting unit. The second combining and splitting unit is configured to: in the second transmission direction, combine multi-carrier signals into one digital signal and transmit the digital signal to the second digital-to-analog conversion unit; and in the first transmission direction, split one digital signal received from the second digital-to-analog conversion unit into a plurality of multi-carrier signals. The second digital-to-analog conversion unit is configured to: in the second transmission direction, convert the digital signal received from the second combining and splitting unit into the analog signal and transmit the analog signal to the first digital-to-analog conversion unit; and in the first transmission direction, convert the received analog signal into the digital signal and transmit the digital signal to the second combining and splitting unit. The first transmission direction is a downlink direction, and the second transmission direction is an uplink direction.

In this way, an analog signal is transmitted between the first communication module and the second communication module, and the analog signal can be modulated in a higher-order manner. Therefore, higher-order modulation has been performed on the analog carrier signal on a baseband side, so that higher-order modulation does not need to be performed again. This greatly improves transmission efficiency at low costs. Therefore, according to the communication system provided in this embodiment of this application, transmission efficiency between a communication module (for example, a baseband unit) and another communication module (for example, a radio unit) is effectively improved, and a transmission capacity of a channel is greatly improved, so that a transmission capacity requirement of massive MIMO can be met. In addition, no additional higher-order modulation needs to be performed, thereby reducing costs and avoiding excessively high power consumption.

In a feasible implementation, the second communication module further includes an intermediate frequency unit, the intermediate frequency unit is connected to the second combining and splitting unit, and a digital signal is transmitted between the intermediate frequency unit and the second combining and splitting unit.

In a feasible implementation, the intermediate frequency unit includes a digital filter and a digital path, the digital filter is connected to the second combining and splitting unit, and a digital signal is transmitted between the digital filter and the second combining and splitting unit. The digital filter is configured to filter the multi-carrier signals received from the second combining and splitting unit. The digital path is connected to the digital filter, and a digital signal is transmitted between the digital path and the digital filter. The digital path is configured to perform frequency conversion processing on a digital signal obtained after the digital filter performs filtering.

In a feasible implementation, the digital path includes a first digital path and a second digital path, the first digital path is connected to the digital filter, and a digital signal is transmitted between the first digital path and the digital filter. The second digital path is connected to the second combining and splitting unit, and a digital signal is transmitted between the second digital path and the second combining and splitting unit.

In a feasible implementation, the first communication module further includes a first correction unit, the first correction unit is connected to the first combining and splitting unit, and the first correction unit is located on the other side of the first combining and splitting unit.

In a feasible implementation, the second communication module further includes a second correction unit, the second correction unit is connected to the second combining and splitting unit, and the second correction unit is located on the other side of the second combining and splitting unit.

In a feasible implementation, the first communication module is a baseband unit, and the second communication module is a radio unit.

In a feasible implementation, one of the first communication module and the second communication module is a carrier chip, and the other of the first communication module and the second communication module is an intermediate frequency chip.

In a feasible implementation, the communication system is located in a same communication device, and the communication device is a radio unit.

In a feasible implementation, an analog signal is transmitted between the first communication module and the second communication module through any transmission medium in an optical fiber, a cable, a microwave, and free space optics communication (FSO).

### BRIEF DESCRIPTION OF DRAWINGS

FIG. 1 is a diagram of a structure of signal transmission between a BBU and an RU;
FIG. 2A is a block diagram of a structure of a communication module according to an embodiment of this application;
FIG. 2B is a block diagram of another structure of a communication module according to an embodiment of this application;
FIG. 2C is a block diagram of still another structure of a communication module according to an embodiment of this application;
FIG. 3A is a block diagram of a structure of another communication module according to an embodiment of this application;
FIG. 3B is a block diagram of a structure of another communication module according to an embodiment of this application;
FIG. 3C is a block diagram of a structure of another communication module according to an embodiment of this application;
FIG. 4 is a block diagram of a structure of still another communication module according to an embodiment of this application;
FIG. 5 is a diagram of a structure of a communication system according to an embodiment of this application;
FIG. 6A is a diagram of another structure of a communication system according to an embodiment of this application;
FIG. 6B is a diagram of still another structure of a communication system according to an embodiment of this application;
FIG. 6C is a diagram of yet another structure of a communication system according to an embodiment of this application; and
FIG. 7 is a diagram of an application scenario of a communication system according to an embodiment of this application.

### Description of reference numerals:

100-communication module; 110-combining and splitting unit; 120-digital-to-analog conversion unit; 160-correction unit; 110b-combiner; 110a-splitter; 111-first combining and splitting unit; 112-first digital-to-analog conversion unit; 121-second combining and splitting unit; 122-second digital-to-analog conversion unit; 120a-analog-to-digital converter; 120b-digital-to-analog converter; 113-first correction unit; and 123-second correction unit;
130-intermediate frequency unit; 131-first digital path; 132-second digital path; 133-digital filter; and 134-digital path;
140-sending unit; and 150-receiving unit; and
200-communication system; 201-radio access network; 202-core network; and 203-internet.

### DESCRIPTION OF EMBODIMENTS

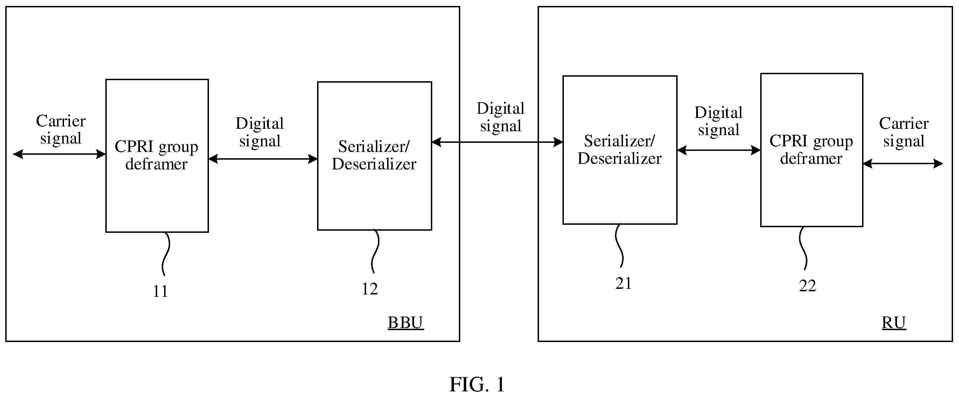

FIG. 1 is a diagram of a structure of signal transmission between a baseband unit (Baseband Unit, BBU) and a radio unit (Radio Unit, RU). Referring to FIG. 1, an interface between the baseband unit (BBU) and the radio unit (RU) is usually a common public radio interface (Common Public Radio Interface, CPRI). The CPRI performs transmission based on a digital manner. For example, a digital signal is transmitted between the BBU and the RU. Referring to FIG. 1, in a downlink direction, a carrier signal generated on a BBU side is compressed and switched through a CPRI group deframer 11 and is transmitted to a serializer/deserializer 12 as a digital signal. The serializer/deserializer 12 converts the digital signal into serial data and transmits the serial data to an RU side as a digital signal. A serializer/deserializer 21 on the RU side converts the received serial data into parallel data and transmits the parallel data to a CPRI group deframer 22 on the RU side as a digital signal. The CPRI group deframer 22 on the RU side decompresses and deframes the received parallel data to generate a carrier signal. Signal transmission in an uplink direction is opposite to signal transmission in the downlink direction.

The CPRI transmits a digital carrier signal, and the digital carrier signal has been modulated in a baseband. The digital signal is usually modulated in a lower-order modulation scheme such as non-return-to-zero (Non-Return-to-Zero, NRZ) coding or pulse amplitude modulation (Pulse Amplitude Modulation, PAM). However, when digital transmission is performed on the CPRI, a modulation result of the baseband cannot improve transmission efficiency of the CPRI, and a limit capacity of a channel cannot be better approached. Especially, after a quantity of channels is greatly increased, the CPRI cannot meet a transmission capacity requirement of massive MIMO (a massive dense multi-input multi-output antenna array). Therefore, a capacity of the CPRI becomes a bottleneck of a capacity of an entire base station system. If the transmission efficiency of the CPRI needs to be improved, additional higher-order modulation needs to be performed on the digital signal. However, higher-order modulation causes excessively high costs and power consumption. This is unbearable for the base station system.

To resolve the foregoing problem, in embodiments of this application, a digital carrier signal transmitted between a BBU and an RU is adjusted to an analog carrier signal, and higher-order modulation can be used for the analog carrier signal. Therefore, higher-order modulation has been performed on the analog carrier signal on a baseband side, so that higher-order modulation does not need to be performed again. This greatly improves transmission efficiency at low costs.

The following describes in detail structures of a communication module and a communication system provided in embodiments of this application.

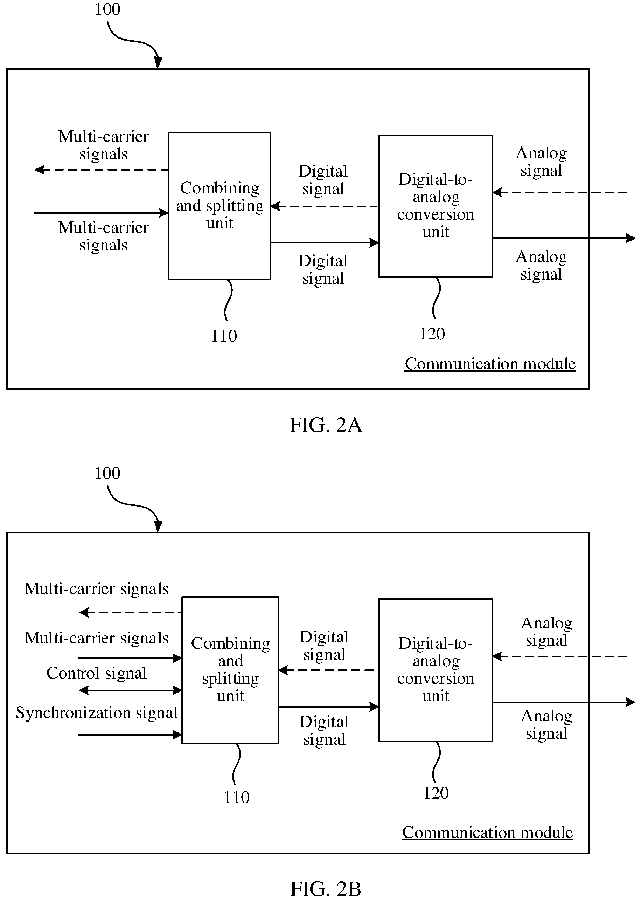

Referring to FIG. 2A, an embodiment of this application provides a communication module 100. The communication module 100 may be a baseband unit, or may be a radio unit. In FIG. 2A, an example in which the communication module 100 is a baseband unit is used for description. Referring to FIG. 2A, the communication module 100 may include a combining and splitting unit 110 and a digital-to-analog conversion unit 120. The digital-to-analog conversion unit 120 is located on one side of the combining and splitting unit 110. For example, in FIG. 2A, the digital-to-analog conversion unit 120 is located on a right side of the combining and splitting unit 110. The combining and splitting unit 110 is connected to the digital-to-analog conversion unit 120, and a digital signal is transmitted between the combining and splitting unit 110 and the digital-to-analog conversion unit 120.

In a first transmission direction (for example, a direction of a solid-line arrow in FIG. 2A), the combining and splitting unit 110 combines multi-carrier signals into one digital signal and transmits the combined digital signal to the digital-to-analog conversion unit 120, and the digital-to-analog conversion unit 120 converts the digital signal received from the combining and splitting unit 110 into an analog signal.

In a second transmission direction (for example, a direction of a dashed-line arrow in FIG. 2A), the digital-to-analog conversion unit 120 converts a received analog signal into a digital signal and transmits the converted digital signal to the combining and splitting unit 110, and the combining and splitting unit 110 splits the digital signal received from the digital-to-analog conversion unit 120 into a plurality of multi-carrier signals.

In this embodiment of this application, one of the first transmission direction and the second transmission direction is an uplink direction, and the other is a downlink direction. For example, in FIG. 2A, the first transmission direction is a downlink direction, and the second transmission direction is an uplink direction. Certainly, in some examples, alternatively, the first transmission direction may be an uplink direction, and the second transmission direction may be a downlink direction. For example, when the communication module is used as a BBU, the first transmission direction is a downlink direction, and the second transmission direction is an uplink direction. When the communication module is used as an RU, the first transmission direction is an uplink direction, and the second transmission direction is a downlink direction.

In this embodiment of this application, the multi-carrier signals received by the combining and splitting unit 110 may be downlink multi-carrier signals, and the plurality of multi-carrier signals obtained by the combining and splitting unit 110 through splitting may be uplink multi-carrier signals.

According to the communication module 100 provided in this embodiment of this application, the combining and splitting unit 110 and the digital-to-analog conversion unit 120 are disposed, so that the combining and splitting unit 110 can combine the received multi-carrier signals to generate the digital signal, and the digital-to-analog conversion unit 120 converts the digital signal into the analog signal and sends the analog signal. In this way, when the communication module 100 is a baseband unit, an analog signal is transmitted between the communication module 100 and another module (for example, a radio unit), and higher-order modulation can be performed on the analog signal. Therefore, higher-order modulation has been performed on the analog carrier signal on a baseband side, so that higher-order modulation does not need to be performed again. This greatly improves transmission efficiency at low costs. Therefore, according to the communication module 100 provided in this embodiment of this application, transmission efficiency between the communication module 100 and another module is effectively improved, and a transmission capacity of a channel is greatly improved, so that a transmission capacity requirement of massive MIMO can be met. In addition, no additional higher-order modulation needs to be performed, thereby reducing costs and avoiding excessively high power consumption.

In this embodiment of this application, referring to FIG. 2B, when the combining and splitting unit 110 receives and transmits the multi-carrier signals in the first transmission direction, the combining and splitting unit 110 can further receive a corresponding control signal and synchronization signal in the first transmission direction. The synchronization signal may include at least one of a clock synchronization signal and a phase synchronization signal, and the control signal, the synchronization signal, and the multi-carrier signals are combined by the combining and splitting unit 110 to form one or more groups of digital signals. When the combining and splitting unit 110 splits the digital signal received from the digital-to-analog conversion unit 120 into the plurality of carrier signals in the second transmission direction, the combining and splitting unit 110 further obtains a control signal through splitting. In this embodiment of this application, the control signal is used to control exchange of control information between the communication module 100 (for example, a BBU) and another communication module (for example, an RU) connected to the communication module 100. The synchronization signal is used to meet a synchronization requirement for a signal transmitted in the first transmission direction or the second transmission direction.

In this embodiment of this application, a digital signal is transmitted between the combining and splitting unit 110 and the digital-to-analog conversion unit 120. When a digital signal is transmitted, a correction algorithm may be used to correct the digital signal, to improve a signal-to-noise ratio (signal-to-noise ratio, SNR). However, when an analog signal is transmitted between the combining and splitting unit 110 and the digital-to-analog conversion unit 120, because the analog signal cannot be corrected, performance requirements of the 3rd generation partnership project (3rd Generation Partnership Project, 3GPP), for example, an adjacent channel leakage ratio (Adjacent Channel Leakage Ratio, ACLR) and error vector magnitude (Error Vector Magnitude, EVM) in performance of the 3GPP, cannot be met.

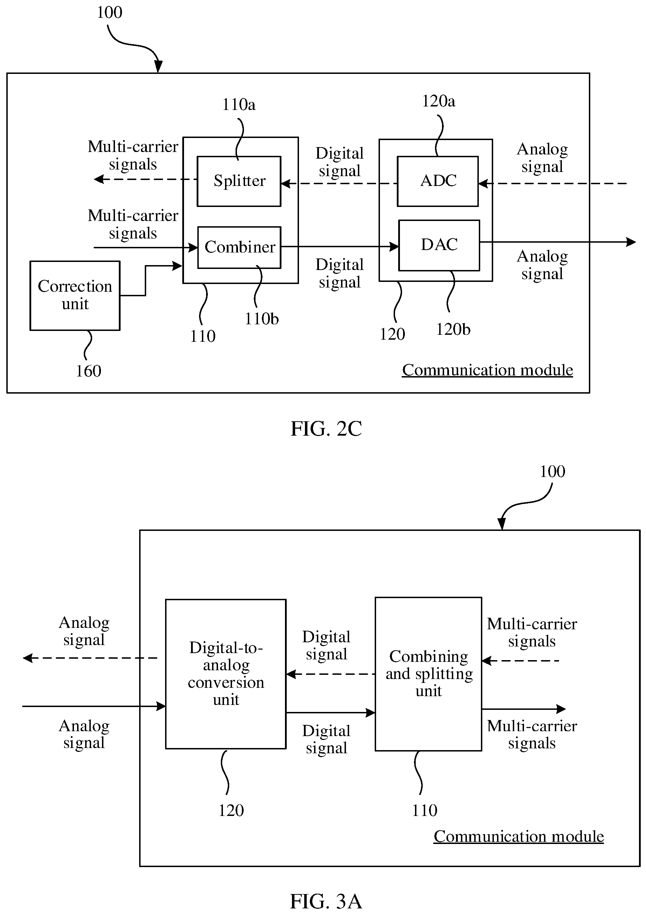

Therefore, in this embodiment of this application, referring to FIG. 2C, the communication module 100 further includes a correction unit 160. The correction unit 160 is connected to the combining and splitting unit 110, and the correction unit 160 is configured to: in the first transmission direction, correct the digital signal between the combining and splitting unit 110 and the digital-to-analog conversion unit 120, so that the digital signal can meet performance requirements of the 3GPP.

In this embodiment of this application, in a possible implementation, referring to FIG. 2C, the combining and splitting unit 110 includes a combiner 110b and a splitter 110a. The combiner 110b and the splitter 110a may be disposed in parallel. The combiner 110b is configured to: in the first transmission direction, combine the multi-carrier signals into one digital signal and transmit the digital signal to the digital-to-analog conversion unit 120. The splitter 110a is configured to: in the second transmission direction, split the digital signal received from an analog-to-digital converter into the plurality of multi-carrier signals.

In a possible implementation, referring to FIG. 2C, the digital-to-analog conversion unit 120 includes the analog-to-digital converter (Analog-to-digital converter, ADC) 120a and a digital-to-analog converter (Digital-to-analog Converter, DAC) 120b. The analog-to-digital converter 120a and the digital-to-analog converter 120b are disposed in parallel. The analog-to-digital converter 120a is configured to: in the second transmission direction, convert the received analog signal into the digital signal and transmit the digital signal to the splitter 110a of the combining and splitting unit 110. The digital-to-analog converter 120b is configured to: in the first transmission direction, convert the digital signal received from the combiner 110b of the combining and splitting unit 110 into the analog signal.

In this embodiment of this application, both the ADC and the DAC are ultra-high-speed converters. One ADC can support dozens of channels, and one DAC can support dozens of channels, or even a larger quantity of channels, thereby greatly improving transmission efficiency.

In this embodiment of this application, the communication module 100 may alternatively be a radio unit. The following provides descriptions by using an example in which the communication module 100 is a radio unit. Referring to FIG. 3A, when the communication module 100 is used as a radio unit, a first transmission direction may be an uplink direction, for example, a direction of a dashed-line arrow in FIG. 3A, and a second transmission direction may be a downlink direction, for example, a direction of a solid-line arrow in FIG. 3A.

Referring to FIG. 3A, in the first transmission direction (for example, the direction of the dashed-line arrow in FIG. 3A), the combining and splitting unit 110 combines multi-carrier signals into one digital signal and transmits the combined digital signal to the digital-to-analog conversion unit 120, and the digital-to-analog conversion unit 120 converts the digital signal received from the combining and splitting unit 110 into an analog signal. In the second transmission direction (for example, the direction of the solid-line arrow in FIG. 3A), the digital-to-analog conversion unit 120 converts a received analog signal into a digital signal and transmits the converted digital signal to the combining and splitting unit 110, and the combining and splitting unit 110 splits the digital signal received from the digital-to-analog conversion unit 120 into a plurality of multi-carrier signals.

In this way, an analog signal is transmitted between the radio unit and another module (for example, a baseband unit), and higher-order modulation can be performed on the analog signal. Therefore, higher-order modulation has been performed on the analog carrier signal on a baseband side, so that higher-order modulation does not need to be performed again. This greatly improves transmission efficiency at low costs. Therefore, according to the communication module 100 provided in this embodiment of this application, transmission efficiency between the communication module 100 and another module is effectively improved, and a transmission capacity of a channel is greatly improved, so that a transmission capacity requirement of massive MIMO can be met. In addition, no additional higher-order modulation needs to be performed, thereby reducing costs and avoiding excessively high power consumption.

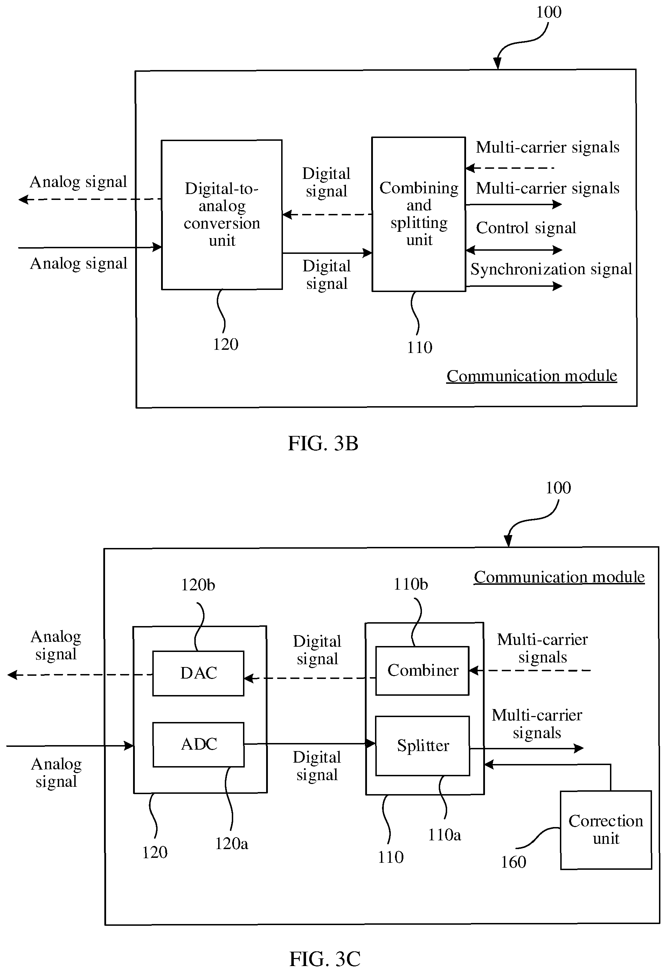

Referring to FIG. 3B, when the communication module 100 is a radio unit, when the combining and splitting unit 110 receives and transmits the multi-carrier signals in the first transmission direction, the combining and splitting unit 110 can further receive a corresponding control signal in the first transmission direction. The control signal and the multi-carrier signals are combined by the combining and splitting unit 110 to form one or more groups of digital signals. When the combining and splitting unit 110 splits the digital signal received from the digital-to-analog conversion unit 120 into the plurality of carrier signals in the second transmission direction, the combining and splitting unit 110 further obtains a control signal and a synchronization signal through splitting. The synchronization signal may include at least one of a clock synchronization signal and a phase synchronization signal.

In this embodiment of this application, for functions of the control signal and the synchronization signal, refer to the foregoing descriptions. Details are not described again in this embodiment of this application.

Referring to FIG. 3C, when the communication module 100 is a radio unit, the communication module 100 further includes a correction unit 160. The correction unit 160 is connected to the combining and splitting unit 110, and the correction unit 160 is configured to: in the first transmission direction, correct the digital signal between the combining and splitting unit 110 and the digital-to-analog conversion unit 120, so that the digital signal can meet performance requirements of the 3GPP.

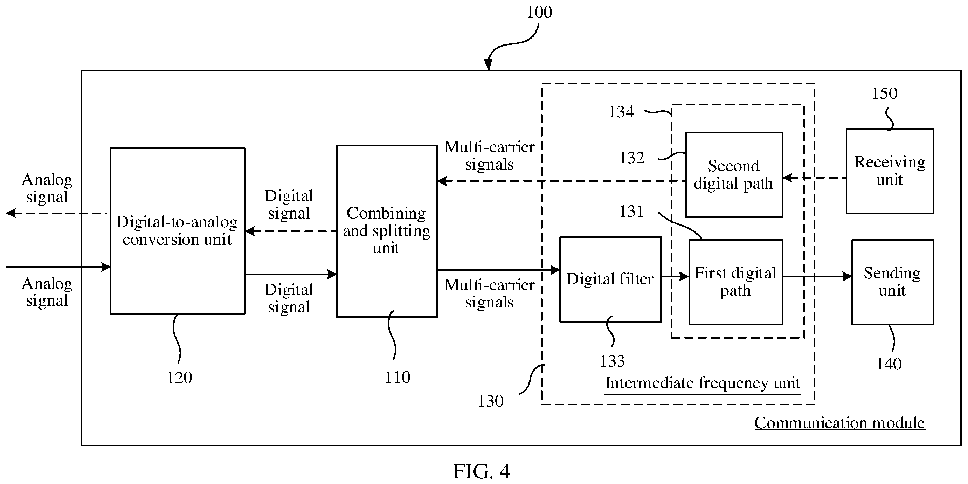

In a possible implementation, when the communication module 100 is a radio unit, referring to FIG. 4, the communication module 100 further includes an intermediate frequency unit 130. The intermediate frequency unit 130 is located on the other side of the combining and splitting unit 110. For example, in FIG. 4, the intermediate frequency unit 130 is located on a right side of the combining and splitting unit 110, and the digital-to-analog conversion unit 120 is located on a left side of the combining and splitting unit 110. The intermediate frequency unit 130 is connected to the combining and splitting unit 110, and a digital signal is transmitted between the intermediate frequency unit 130 and the combining and splitting unit 110. In the second transmission direction, filtering and frequency conversion processing can be performed on the digital multi-carrier signals received by the intermediate frequency unit 130 from the combining and splitting unit 110, to meet performance requirements of the 3GPP.

In this embodiment of this application, referring to FIG. 4, in the second transmission direction, the combining and splitting unit 110 receives the digital signal from the digital-to-analog conversion unit 120. Further, the plurality of carrier signals obtained by the combining and splitting unit 110 by splitting the digital signal are digital signals. In this way, the intermediate frequency unit 130 can filter the digital signals, and due to the filtering of the digital signals, indicator requirements of the 3GPP for an ACLR and EVM can be met. In addition, due to the filtering of the digital signals, a (dynamic) SNR requirement for a transmission link is greatly reduced. In this embodiment of this application, the intermediate frequency unit 130 includes a digital filter 133 and a digital path 134. The digital filter 133 is connected to the combining and splitting unit 110, and a digital signal is transmitted between the digital filter 133 and the combining and splitting unit 110. The digital filter 133 is configured to filter a digital signal received from the combining and splitting unit 110 and transmit a filtered digital signal through the digital path 134 (for example, the first digital path 131 described below). According to the digital filter 133, a transition band of the digital filter is made very narrow, and an edge of the transition band is made extremely steep, to meet an indicator requirement of the 3GPP for an adjacent channel leakage ratio (Adjacent Channel Leakage Ratio, ACLR). In addition, a (dynamic) SNR requirement for a transmission link is greatly reduced.

In this embodiment of this application, the digital filter 133 may be a shaping filter, and the shaping filter can filter a digital signal. The shaping filter uses a CPRI.

Referring to FIG. 4, the digital path 134 is connected to the digital filter 133, a digital signal is transmitted between the digital path 134 and the digital filter 133, and the digital path 134 is configured to perform frequency conversion processing on a digital signal obtained after the digital filter 133 performs filtering. In some examples, the digital path 134 may alternatively be connected to the combining and splitting unit 110.

Referring to FIG. 4, the digital path 134 may include a first digital path 131 and a second digital path 132. The first digital path 131 is connected to the digital filter 133, a digital signal is transmitted between the first digital path 131 and the digital filter 133, and the first digital path 131 performs frequency conversion processing on a digital signal obtained after the digital filter 133 performs filtering.

The second digital path 132 is connected to the combining and splitting unit 110. The second digital path 132 performs frequency conversion processing on received multi-carrier signals and sends processed multi-carrier signals to the combining and splitting unit 110. The second digital path 132 processes the multi-carrier signals in the first transmission direction, so that SNRs of the multi-carrier signals are improved.

In a possible implementation, referring to FIG. 4, the communication module 100 further includes a receiving unit 150 and a sending unit 140. The receiving unit 150 may receive the multi-carrier signals, and the sending unit 140 may send digital multi-carrier signals transmitted by the first digital path 131.

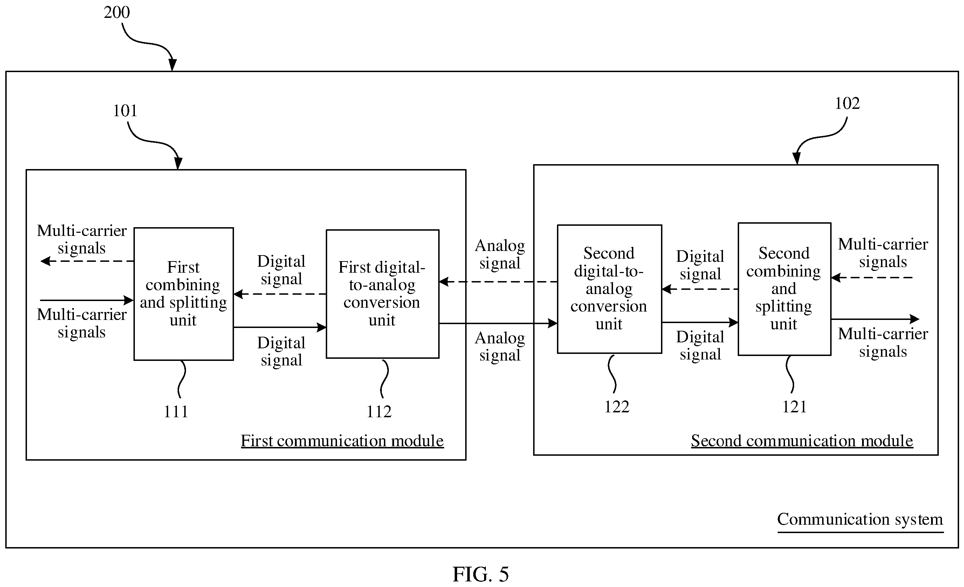

An embodiment of this application further provides a communication system 200. Different parts of the communication system 200 may be located in different communication devices. For example, the communication system is located in a distributed base station. Alternatively, the communication system 200 is located in a same communication device, and the communication device may be an integrated base station, or may be a radio unit (RU). In this embodiment of this application, an example in which the communication system 200 is located in a same communication device and the communication device is a radio unit is specifically used for description. Referring to FIG. 5, the communication system 200 may include a first communication module 101 and a second communication module 102. An analog signal is transmitted between the first communication module 101 and the second communication module 102. When the communication device is a radio unit, the first communication module 101 may be a primary chip, for example, a multi-carrier chip, and the second communication module 102 may be a secondary chip, for example, an intermediate frequency chip. An analog signal is transmitted between the primary chip and the secondary chip, so that transmission efficiency between the primary chip and the secondary chip can be improved.

Referring to FIG. 5, the first communication module 101 may include a first combining and splitting unit 111 and a first digital-to-analog conversion unit 112. The first digital-to-analog conversion unit 112 is located on one side of the first combining and splitting unit 111. For example, in FIG. 5, the first digital-to-analog conversion unit 112 is located on a right side of the first combining and splitting unit 111. The first combining and splitting unit 111 is connected to the first digital-to-analog conversion unit 112, and a digital signal is transmitted between the first combining and splitting unit 111 and the first digital-to-analog conversion unit 112.

The second communication module 102 includes a second combining and splitting unit 121 and a second digital-to-analog conversion unit 122. The second digital-to-analog conversion unit 122 is located on one side of the second combining and splitting unit 121. For example, in FIG. 5, the second digital-to-analog conversion unit 122 is located on a left side of the second combining and splitting unit 121. The second combining and splitting unit 121 is connected to the second digital-to-analog conversion unit 122, and a digital signal is transmitted between the second combining and splitting unit 121 and the second digital-to-analog conversion unit 122.

Referring to FIG. 5, a first transmission direction may be a downlink direction, for example, a direction of a solid-line arrow in FIG. 5, and a second transmission direction may be an uplink direction, for example, a direction of a dashed-line arrow in FIG. 5.

In the first transmission direction (for example, the downlink direction), the first combining and splitting unit 111 combines multi-carrier signals into one digital signal and transmits the digital signal to the first digital-to-analog conversion unit 112, the first digital-to-analog conversion unit 112 converts the digital signal received from the first combining and splitting unit 111 into an analog signal and transmits the analog signal to the second digital-to-analog conversion unit 122, the second digital-to-analog conversion unit 122 converts the analog signal received from the first digital-to-analog conversion unit 112 into a digital signal and transmits the digital signal to the second combining and splitting unit 121, and the second combining and splitting unit 121 splits the digital signal received from the second digital-to-analog conversion unit 122 into a plurality of multi-carrier signals.

In the second transmission direction (for example, the uplink direction), the second combining and splitting unit 121 combines received multi-carrier signals into one digital signal and transmits the digital signal to the second digital-to-analog conversion unit 122, the second digital-to-analog conversion unit 122 converts the digital signal received from the second combining and splitting unit 121 into an analog signal and transmits the analog signal to the first digital-to-analog conversion unit 112, the first digital-to-analog conversion unit 112 converts the analog signal received from the second digital-to-analog conversion unit 122 into a digital signal and transmits the digital signal to the first combining and splitting unit 111, and the first combining and splitting unit 111 splits the digital signal received from the first digital-to-analog conversion unit 112 into a plurality of multi-carrier signals.

In this way, an analog signal is transmitted between the first communication module 101 and the second communication module 102, and the analog signal can be modulated in a higher-order manner. Therefore, higher-order modulation has been performed on the analog carrier signal on a baseband side, so that higher-order modulation does not need to be performed again. This greatly improves transmission efficiency at low costs. Therefore, according to the communication system provided in this embodiment of this application, transmission efficiency between communication modules is effectively improved, and a transmission capacity of a channel is greatly improved, so that a transmission capacity requirement of massive MIMO can be met. In addition, no additional higher-order modulation needs to be performed, thereby reducing costs and avoiding excessively high power consumption.

It should be noted that, for functions and structures of the first combining and splitting unit 111 and the second combining and splitting unit 121, refer to those of the combining and splitting unit 110 in the foregoing communication module 100; and for functions of the first digital-to-analog conversion unit 112 and the second digital-to-analog conversion unit 122, refer to those of the digital-to-analog conversion unit 120 in the foregoing communication module 100.

In this embodiment of this application, when an analog signal is transmitted between the first communication module 101 and the second communication module 102, the analog signal may be transmitted through a transmission medium. The transmission medium may include any one of an optical fiber, a cable, a microwave, and free space optics communication (free space optics communication, FSO).

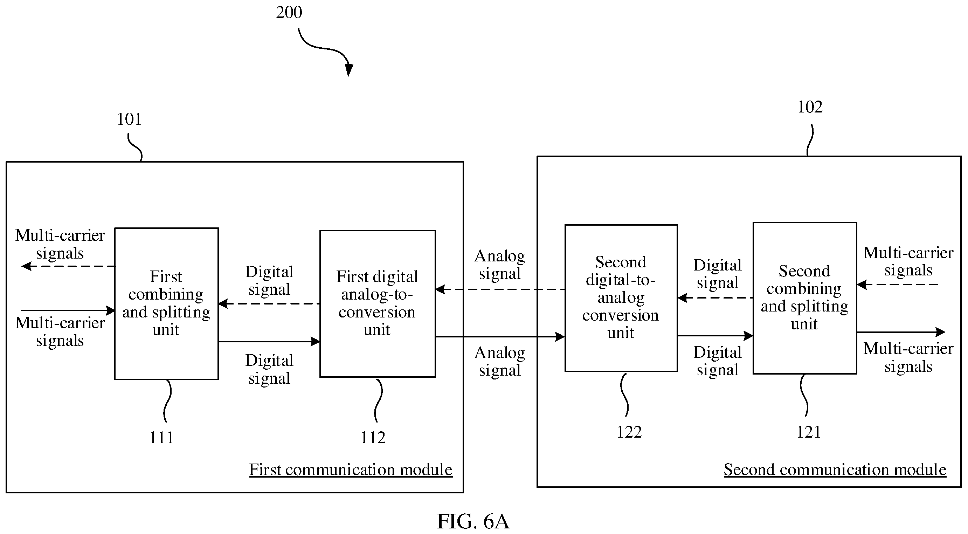

In a possible implementation, referring to FIG. 6A, the communication system 200 may alternatively be a base station, and the base station may be a distributed base station or an integrated base station. In this way, the first communication module 101 may be a baseband unit, and the second communication module 102 may be a radio unit. For structures of the baseband unit and the radio unit, refer to those of the first communication module 101 and the second communication module 102 in the foregoing embodiment. It should be noted that, for structures of both the first communication module 101 and the second communication module 102, refer to the communication module 100 in the foregoing embodiment.

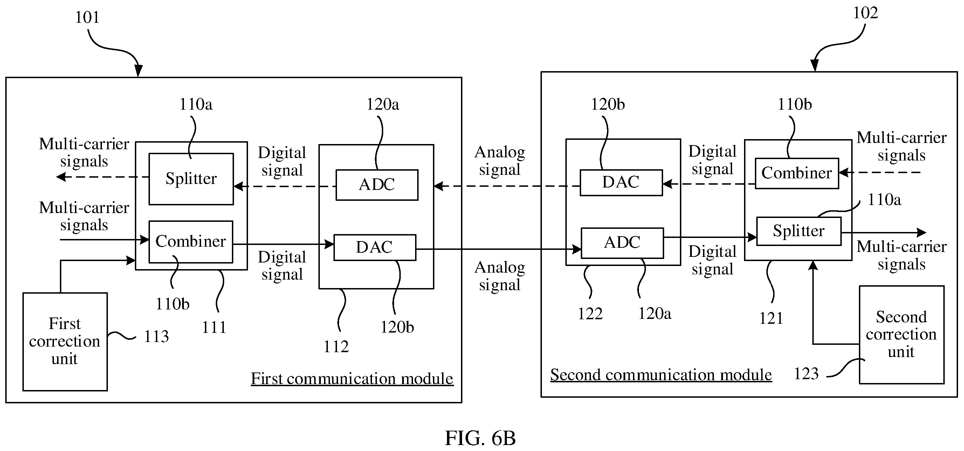

In a possible implementation, referring to FIG. 6B, the first combining and splitting unit 111 and the second combining and splitting unit 121 each include a combiner 110b and a splitter 110a. The combiner 110b and the splitter 110a are disposed in parallel. A combiner 110b of the first combining and splitting unit is configured to: in the first transmission direction, combine the multi-carrier signals into the digital signal and transmit the digital signal to the first digital-to-analog conversion unit 112, and a splitter 110a of the first combining and splitting unit is configured to: in the second transmission direction, split the digital signal received from a first analog-to-digital converter 120a into the plurality of multi-carrier signals. Correspondingly, a combiner 110b of the second combining and splitting unit is configured to: in the second transmission direction, combine the multi-carrier signals into the digital signal and transmit the digital signal to the second digital-to-analog conversion unit 122, and a splitter 110a of the second combining and splitting unit is configured to: in the first transmission direction, split the digital signal received from a second analog-to-digital converter 120a into the plurality of multi-carrier signals.

In a possible implementation, referring to FIG. 6B, the first digital-to-analog conversion unit 112 and the second digital-to-analog conversion unit 122 each include an analog-to-digital converter (Analog-to-digital converter, ADC) 120a and a digital-to-analog converter (Digital-to-analog Converter, DAC) 120b. The analog-to-digital converter 120a and the digital-to-analog converter 120b are disposed in parallel. The analog-to-digital converter 120a of the first digital-to-analog conversion unit 112 is configured to: in the second transmission direction, convert the received analog signal into the digital signal and transmit the digital signal to the splitter 110a of the first combining and splitting unit 111, and a digital-to-analog converter 120b of the first digital-to-analog conversion unit 112 is configured to: in the first transmission direction, convert the digital signal received from the combiner 110b of the first combining and splitting unit 111 into the analog signal and send the analog signal to a digital-to-analog converter 120b of the second digital-to-analog conversion unit 122. Correspondingly, the analog-to-digital converter 120a of the second digital-to-analog conversion unit 122 is configured to: in the first transmission direction, convert the received analog signal into the digital signal and transmit the digital signal to the splitter 110a of the second combining and splitting unit 121, and a digital-to-analog converter 120b of the second digital-to-analog conversion unit 122 is configured to: in the second transmission direction, convert the digital signal received from the combiner 110b of the second combining and splitting unit 121 into the analog signal and send the analog signal to the analog-to-digital converter 120a of the second digital-to-analog conversion unit 122.

In a possible implementation, the first communication module 101 further includes a first correction unit 113. The first correction unit 113 is connected to the first combining and splitting unit 111. The first correction unit 113 is located on the other side of the first combining and splitting unit 111. For example, as shown in FIG. 6B, the first correction unit 113 is located on a left side of the first combining and splitting unit 111, and the first digital-to-analog conversion unit 112 is located on a right side of the first combining and splitting unit 111.

The second communication module 102 further includes a second correction unit 123. The second correction unit 123 is connected to the second combining and splitting unit 121. The second correction unit 123 is located on the other side of the second combining and splitting unit 121. For example, as shown in FIG. 6B, the second correction unit 123 is located on a right side of the second combining and splitting unit 121, and the second digital-to-analog conversion unit 122 is located on a left side of the second combining and splitting unit 121.

In the first transmission direction, the first correction unit 160 corrects the digital signal between the first combining and splitting unit 111 and the first digital-to-analog conversion unit 112, so that the digital signal can meet performance requirements of the 3GPP. In the second transmission direction, the second correction unit 160 corrects the digital signal between the second combining and splitting unit 121 and the second digital-to-analog conversion unit 122, so that the digital signal can meet performance requirements of the 3GPP.

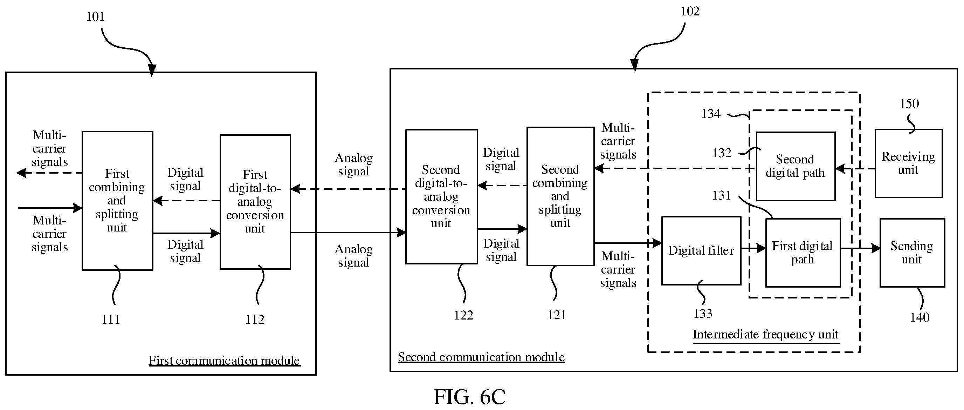

In a possible implementation, referring to FIG. 6C, the second communication module 102 further includes an intermediate frequency unit 130. The intermediate frequency unit 130 is connected to the second combining and splitting unit 121. The intermediate frequency unit 130 is located on the other side of the second combining and splitting unit 121. For example, as shown in FIG. 6C, the intermediate frequency unit 130 is located on a right side of the second combining and splitting unit 121. A digital signal is transmitted between the intermediate frequency unit 130 and the second combining and splitting unit 121. In the first transmission direction, filtering and frequency conversion processing can be performed on the digital multi-carrier signals received by the intermediate frequency unit 130 from the second combining and splitting unit 121, to meet performance requirements of the 3GPP.

In this embodiment of this application, referring to FIG. 6C, in the first transmission direction, the second combining and splitting unit 121 receives the digital signal from the second digital-to-analog conversion unit 122. Therefore, the plurality of carrier signals obtained by the second combining and splitting unit 121 by splitting the digital signal are digital signals. In this way, the intermediate frequency unit 130 can filter the digital signals, and due to the filtering of the digital signals, an indicator requirement of the 3GPP for an ACLR can be met. In addition, due to the filtering of the digital signals, a (dynamic) SNR requirement for a transmission link is greatly reduced. Therefore, in this embodiment of this application, the intermediate frequency unit 130 includes a digital filter 133. The digital filter 133 is connected to the combining and splitting unit 110, and a digital signal is transmitted between the digital filter 133 and the combining and splitting unit 110. The digital filter 133 is configured to filter a digital signal received from the combining and splitting unit 110 and transmit a filtered digital signal through a digital path 134. According to the digital filter 133, a signal edge is made extremely steep, to meet an indicator requirement of the 3GPP for an ACLR. In addition, a (dynamic) SNR requirement for a transmission link is greatly reduced.

In a possible implementation, referring to FIG. 6C, the intermediate frequency unit 130 further includes the digital path 134. The digital path 134 is connected to at least the digital filter 133, a digital signal is transmitted between the digital path 134 and the digital filter 133, and the digital path 134 is configured to perform at least frequency conversion processing on a digital signal obtained after the digital filter 133 performs filtering.

Referring to FIG. 6C, the digital path 134 may include a first digital path 131 and a second digital path 132. The first digital path 131 is connected to the digital filter 133, a digital signal is transmitted between the first digital path 131 and the digital filter 133, and the first digital path 131 performs frequency conversion processing on a digital signal obtained after the digital filter 133 performs filtering.

The second digital path 132 is connected to the second combining and splitting unit 121. The second digital path 132 performs frequency conversion processing on received multi-carrier signals and sends processed multi-carrier signals to the second combining and splitting unit 121. The second digital path 132 processes the multi-carrier signals in the second transmission direction, so that SNRs of the multi-carrier signals are improved.

In a possible implementation, referring to FIG. 6C, the second communication module 102 further includes a receiving unit 150 and a sending unit 140. The receiving unit 150 may receive the multi-carrier signals, and the sending unit 140 may send digital multi-carrier signals transmitted by the first digital path 131.

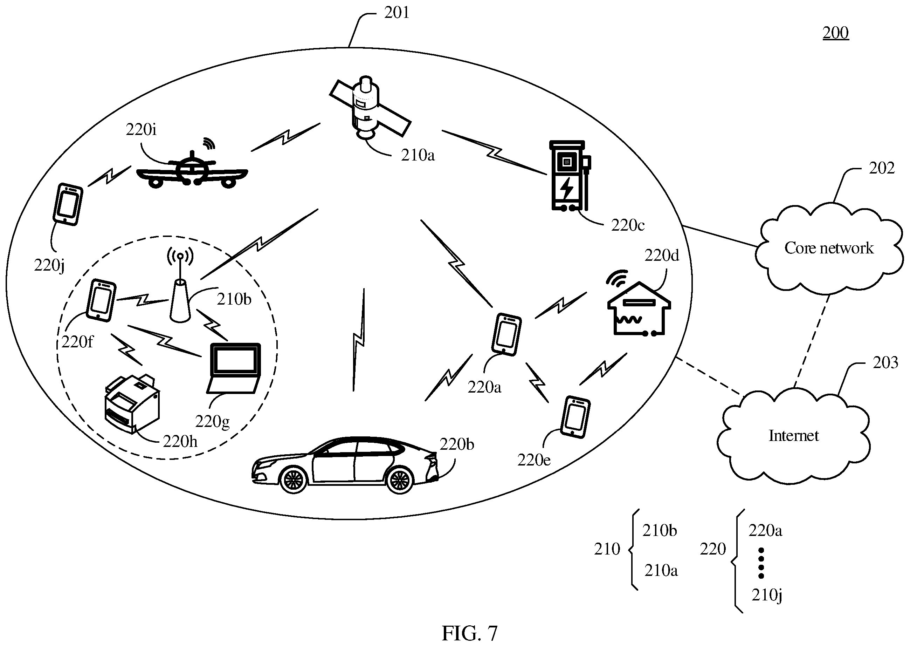

An application scenario of the communication system in this embodiment of this application may be shown in FIG. 7. FIG. 7 is a diagram of a possible and non-limiting system. As shown in FIG. 7, the communication system 200 further includes a radio access network (Radio Access Network, RAN) 201 and a core network (Core Network, CN) 202. The communication system 200 may further include an internet 203. The RAN 201 includes at least one RAN node (for example, 210a and 210b in FIG. 7, collectively referred to as 210) and at least one terminal (for example, 220a to 220j in FIG. 7, collectively referred to as 220). The RAN 201 may further include another RAN node, for example, a wireless relay device and/or a wireless backhaul device (not shown in FIG. 7). The terminal 220 is connected to the RAN node 210 in a wireless manner. The RAN node 210 is connected to the core network 202 in a wireless or wired manner. A core network device in the core network 202 and the RAN node 210 in the RAN 201 may be separately different physical devices, or may be a same physical device that integrates a logical function of the core network and a logical function of the radio access network.

The RAN 201 may be a cellular system related to the 3rd generation partnership project (3rd generation partnership project, 3GPP), for example, a 4G or 5G mobile communication system, or a future-oriented evolved system (for example, a 6G mobile communication system). Alternatively, the RAN 201 may be an open radio access network (open RAN, O-RAN or ORAN), a cloud radio access network (cloud radio access network, CRAN), or a wireless fidelity (wireless fidelity, Wi-Fi) system. Alternatively, the RAN 201 may be a communication system that integrates two or more of the foregoing systems.

The RAN node 210 may also be sometimes referred to as an access network device, a RAN entity, an access node, or the like, and forms a part of the communication system, to help the terminal implement radio access. The plurality of RAN nodes 210 in the communication system 200 may be nodes of a same type, or may be nodes of different types. In some scenarios, roles of the RAN node 210 and the terminal 220 are relative. For example, the network element 220i in FIG. 7 may be a helicopter or an uncrewed aerial vehicle, and may be configured as a mobile base station. For the terminal 220j that accesses the RAN 201 through the network element 220i, the network element 220i is a base station. However, for the base station 210a, the network element 220i is a terminal. The RAN node 210 and the terminal 220 are sometimes both referred to as communication apparatuses. For example, in FIG. 7, the base stations 210a and 210b may be understood as communication apparatuses having a base station function, and the network elements 220a to 220j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 210a in FIG. 7), a micro base station or an indoor station (for example, 210b in FIG. 7), a relay node or a donor node, or a radio controller in a CRAN scenario. Optionally, the RAN node may be a server, a wearable device, a vehicle, a vehicle-mounted device, or the like. For example, an access network device in a vehicle-to-everything (vehicle-to-everything, V2X) technology may be a roadside unit (roadside unit, RSU).

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). In an implementation, the communication system is located in a same communication device, and the communication device is an RU. In another implementation, the RU may alternatively be the second communication module 102. The CU and the DU may be separately disposed, or may be included in a same network element, for example, a baseband unit (baseband unit, BBU) (for example, the first communication module 101). The RU (for example, the second communication module 102) may be included in a radio unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art can understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP and the CU-UP), the DU, and the RU in this application may be implemented by using a software module, a hardware module, or a combination of a software module and a hardware module.

It should be understood that, in this application, "electrical connection" may be understood as physical contact and electrical conduction between components, or may be understood as a form in which different components in a line structure are connected through a physical line that can transmit an electrical signal, such as a printed circuit board (printed circuit board, PCB) copper foil or conducting wire. A person skilled in the art may understand that, "communication connection" may indicate electrical signal transmission, including a wireless communication connection and a wired communication connection. The wireless communication connection does not require a physical medium and does not belong to a connection relationship that limits a structure of a product. Both "connection" and "interconnection" may indicate a mechanical connection relationship or a physical connection relationship. To be specific, a connection between A and B or an interconnection between A and B may indicate that there is a fastening component (such as a screw, a bolt, or a rivet) between A and B, or A and B are in contact with each other and A and B are difficult to be separated.

In descriptions of embodiments of this application, it should be noted that, unless otherwise clearly specified and limited, the term "installation", "interconnection", or "connection" should be understood in a broad sense, for example, may be fastening, may be an indirect connection through an intermediate medium, or may be an internal connection between two elements or an interaction relationship between two elements. A person of ordinary skill in the art may understand specific meanings of the foregoing terms in embodiments of this application based on specific cases.

In the specification, claims, and accompanying drawings of embodiments of this application, the terms "first", "second", "third", "fourth", and the like (if existent) are intended to distinguish between similar objects but are not necessarily intended to describe a specific order or sequence.

## Claims

1. A communication module, comprising:
a combining and splitting unit and a digital-to-analog conversion unit, wherein the digital-to-analog conversion unit is located on one side of the combining and splitting unit, the combining and splitting unit is connected to the digital-to-analog conversion unit, and a digital signal is transmitted between the combining and splitting unit and the digital-to-analog conversion unit;
the combining and splitting unit is configured to: in a first transmission direction, combine multi-carrier signals into one digital signal and transmit the digital signal to the digital-to-analog conversion unit; and in a second transmission direction, split one digital signal received from the digital-to-analog conversion unit into a plurality of multi-carrier signals;
the digital-to-analog conversion unit is configured to: in the first transmission direction, convert the digital signal received from the combining and splitting unit into an analog signal; and in the second transmission direction, convert a received analog signal into the digital signal and transmit the digital signal to the combining and splitting unit; and
one of the first transmission direction and the second transmission direction is an uplink direction, and the other is a downlink direction.

2. The communication module according to claim 1, further comprising an intermediate frequency unit, wherein the intermediate frequency unit is located on the other side of the combining and splitting unit, the intermediate frequency unit is connected to the combining and splitting unit, and a digital signal is transmitted between the intermediate frequency unit and the combining and splitting unit.

3. The communication module according to claim 2, wherein the intermediate frequency unit comprises a digital filter and a digital path;
the digital filter is connected to the combining and splitting unit, and a digital signal is transmitted between the digital filter and the combining and splitting unit;
the digital path is connected to the digital filter, and a digital signal is transmitted between the digital path and the digital filter; and
the digital path is configured to perform frequency conversion processing on a digital signal obtained after the digital filter performs filtering.

4. The communication module according to any one of claims 1 to 3, wherein the digital-to-analog conversion unit comprises an analog-to-digital converter and a digital-to-analog converter;
the analog-to-digital converter is configured to: in the second transmission direction, convert the received analog signal into the digital signal and transmit the digital signal to the combining and splitting unit; and
the digital-to-analog converter is configured to: in the first transmission direction, convert the digital signal received from the combining and splitting unit into the analog signal.

5. The communication module according to any one of claims 1 to 4, wherein the combining and splitting unit comprises a combiner and a splitter;
the combiner is configured to: in the first transmission direction, combine the multi-carrier signals into one digital signal and transmit the digital signal to the digital-to-analog conversion unit; and
the splitter is configured to: in the second transmission direction, split the digital signal received from the analog-to-digital converter into the plurality of multi-carrier signals.

6. The communication module according to any one of claims 1 to 5, further comprising a correction unit, wherein the correction unit is connected to the combining and splitting unit.

7. The communication module according to any one of claims 1 to 6, wherein the communication module is a baseband unit.

8. The communication module according to any one of claims 1 to 6, wherein the communication module is a radio unit.

9. A communication system, comprising a first communication module and a second communication module, wherein an analog signal is transmitted between the first communication module and the second communication module;
the first communication module comprises a first combining and splitting unit and a first digital-to-analog conversion unit, the first digital-to-analog conversion unit is located on one side of the first combining and splitting unit, the first combining and splitting unit is connected to the first digital-to-analog conversion unit, and a digital signal is transmitted between the first combining and splitting unit and the first digital-to-analog conversion unit;
the second communication module comprises a second combining and splitting unit and a second digital-to-analog conversion unit, the second digital-to-analog conversion unit is located on one side of the second combining and splitting unit, the second combining and splitting unit is connected to the second digital-to-analog conversion unit, and a digital signal is transmitted between the second combining and splitting unit and the second digital-to-analog conversion unit;
the first combining and splitting unit is configured to: in a first transmission direction, combine multi-carrier signals into one digital signal and transmit the digital signal to the first digital-to-analog conversion unit; and in a second transmission direction, split one digital signal received from the first digital-to-analog conversion unit into a plurality of multi-carrier signals;
the first digital-to-analog conversion unit is configured to: in the first transmission direction, convert the digital signal received from the first combining and splitting unit into an analog signal and transmit the analog signal to the second digital-to-analog conversion unit; and in the second transmission direction, convert a received analog signal into the digital signal and transmit the digital signal to the first combining and splitting unit;
the second combining and splitting unit is configured to: in the second transmission direction, combine multi-carrier signals into one digital signal and transmit the digital signal to the second digital-to-analog conversion unit; and in the first transmission direction, split one digital signal received from the second digital-to-analog conversion unit into a plurality of multi-carrier signals;
the second digital-to-analog conversion unit is configured to: in the second transmission direction, convert the digital signal received from the second combining and splitting unit into the analog signal and transmit the analog signal to the first digital-to-analog conversion unit; and in the first transmission direction, convert the received analog signal into the digital signal and transmit the digital signal to the second combining and splitting unit; and
the first transmission direction is a downlink direction, and the second transmission direction is an uplink direction.

10. The communication system according to claim 9, wherein the second communication module further comprises an intermediate frequency unit, the intermediate frequency unit is located on the other side of the second combining and splitting unit, the intermediate frequency unit is connected to the second combining and splitting unit, and a digital signal is transmitted between the intermediate frequency unit and the second combining and splitting unit.

11. The communication system according to claim 10, wherein the intermediate frequency unit comprises a digital filter and a digital path, the digital filter is connected to the second combining and splitting unit, and a digital signal is transmitted between the digital filter and the second combining and splitting unit;
the digital filter is configured to filter the multi-carrier signals received from the second combining and splitting unit;
the digital path is connected to the digital filter, and a digital signal is transmitted between the digital path and the digital filter; and
the digital path is configured to perform frequency conversion processing on a digital signal obtained after the digital filter performs filtering.

12. The communication system according to claim 11, wherein the digital path comprises a first digital path and a second digital path, the first digital path is connected to the digital filter, and a digital signal is transmitted between the first digital path and the digital filter; and
the second digital path is connected to the second combining and splitting unit, and a digital signal is transmitted between the second digital path and the second combining and splitting unit.

13. The communication system according to any one of claims 9 to 12, wherein the first communication module further comprises a first correction unit, the first correction unit is located on the other side of the first combining and splitting unit, and the first correction unit is connected to the first combining and splitting unit.

14. The communication system according to any one of claims 9 to 13, wherein the second communication module further comprises a second correction unit, the second correction unit is located on the other side of the second combining and splitting unit, and the second correction unit is connected to the second combining and splitting unit.

15. The communication system according to any one of claims 9 to 14, wherein the first communication module is a baseband unit, and the second communication module is a radio unit.

16. The communication system according to any one of claims 9 to 14, wherein one of the first communication module and the second communication module is a carrier chip, and the other of the first communication module and the second communication module is an intermediate frequency chip.

17. The communication system according to claim 16, wherein the communication system is located in a same communication device, and the communication device is a radio unit.

18. The communication system according to any one of claims 9 to 17, wherein an analog signal is transmitted between the first communication module and the second communication module through any transmission medium in an optical fiber, a cable, a microwave, and free space optics communication FSO.
